# EUROPEAN PATENT SPECIFICATION

(11) **EP 3 314 477 B1**
(45) Date of publication and mention of the grant of the patent: **23.12.2020**
(21) Application number: 16813523.4
(22) Date of filing: 09.03.2016
(51) Int. Cl.: G06F 16/22, G06F 16/2453

(54) **SYSTEMS AND METHODS FOR PARALLELIZING HASH-BASED OPERATORS IN SMP DATABASES**
SYSTEME UND VERFAHREN ZUR PARALLELISIERUNG HASH-BASIERTER OPERATOR IN SMP-DATENBANKEN
SYSTÈMES ET PROCÉDÉS DE PARALLÉLISATION D'OPÉRATEURS SUR LA BASE DU HACHAGE DANS DES BASES DE DONNÉES SMP

(30) Priority: 24.06.2015 US 201514749098
(43) Date of publication of application: 02.05.2018
(73) Proprietor: Huawei Technologies Co., Ltd., Longgang District Shenzhen, Guangdong 518129 (CN)
(72) Inventor: LI, Huaizhi, Belmont, California 94002 (US); ZHANG, Guogen, San Jose, California 95120 (US); SUN, Jason Yang, Palo Alto, California 94303 (US)
(74) Representative: Isarpatent
(86) International application number: PCT/CN2016/075960
(87) International publication number: WO 2016/206407

(56) References cited:
- CN-A- 103 942 343
- US-A1- 2012 011 108
- US-A1- 2013 173 592
- US-A1- 2014 379 985
- US-B1- 8 572 051
- CHANGKYU KIM ET AL: "Sort vs. Hash revisited", PROCEEDINGS OF THE VLDB ENDOWMENT; [ACM DIGITAL LIBRARY], ASSOC. OF COMPUTING MACHINERY, NEW YORK, NY, vol. 2, no. 2, 1 August 2009 (2009-08-01), pages 1378-1389, XP058359500, ISSN: 2150-8097, DOI: 10.14778/1687553.1687564
- SPYROS BLANAS ET AL: "Design and evaluation of main memory hash join algorithms for multi-core CPUs", PROCEEDINGS OF THE 2011 ACM SIGMOD INTERNATIONAL CONFERENCE ON MANAGEMENT OF DATA; JUNE 12-16, 2011; ATHENS, GREECE, ACM, NEW YORK, NY, USA, 12 June 2011 (2011-06-12), pages 37-48, XP058003119, DOI: 10.1145/1989323.1989328 ISBN: 978-1-4503-0661-4

## Description

### CROSS-REFERENCE TO RELATED APPLICATIONS

This application claims priority to U.S. non-provisional patent application Serial No. 14/749,098, filed on June 24, 2015 and entitled "Systems and Methods for Parallelizing Hash-based Operators in SMP Databases,".

### TECHNICAL FIELD

The present invention relates generally to a system and method databases, and, in particular embodiments, to a system and method for parallelizing hash-based operators in symmetric multiprocessing (SMP) databases.

### BACKGROUND

With the booming of Internet applications more and more data is generated and stored into database. The database queries can be very complicated. Parallel processing database management systems are designed for managing and processing huge amount of data. A symmetric multiprocessing (SMP) computer system contains multiple central processing unit (CPU) cores which shares large amount of memory and is ideal for running a parallel processing database system.

For database operations, hash-based operators include hash join and hash aggregation. Hash join is a method to find, for each distinct value of the join attribute, the set of tuples in each database table having that value. Hash join consists of two phases: build phase and probe phase. When joining two tables, first the build phase creates a hash table on top of the smaller table (inner table). A hash table entry contains the join attribute and the data row. The probe phase uses the same hash function as the build phase. It scans the rows of the larger table (outer table), hashes the join attribute and finds the matching rows in the inner table by referring to the hash table. Hash aggregation is a way to implement the database aggregate operations such as group by and distinct. Similar as the hash join operator, it also creates a hash table on top to the relation data with the target aggregate attribute as the hash key. From the hash table, the tuples can be distributed into groups or the unique ones can be extracted.
US 2012/011108 A1 relates to hash-join in parallel computation environments. Changkyu, Kim et a. report on fast join implementation on modern multi-core CPUs ("Sort vs. Hash Revisited: Fast Join Implementation on Modern Multi-Core CPUs," Proceedings of the VLDB Endowment, vol. 2, no. 2, 2009, pages 1378-1389). Blanas, Spyros et al. report the design and evaluation of main memory hash join algorithms for multi-core CPUs ("Design and Evaluation of Main Memory Hash Join Algorithms for Multi-core CPUs," Proceedings of the 2011 ACM Sigmod International conference on management of data, 2011, pages 37-48).

### SUMMARY

The invention is defined by the appended claims. In accordance with an embodiment of the present disclosure, a method in a device for performing hash based database operations includes receiving at the device a database query; creating a plurality of execution workers to process the query; and building by the execution workers a hash table from a database table, the database table comprising one of a plurality of partitions and a plurality of scan units, the hash table shared by the execution workers, each execution worker scanning a corresponding partition and adding entries to the hash table if the database table is partitioned, each execution worker scanning an unprocessed scan unit and adding entries to the hash table according to the scan unit if the database table comprises scan units, and the workers performing the scanning and the adding in a parallel manner.

In accordance with another embodiment, a device configured for performing hash based database operations includes a processor and a non-transitory computer readable storage medium storing programming for execution by the processor, the programming including instructions to: receive a database query; create a plurality of execution workers to process the query; and build, by the execution workers, a hash table from a database table, the database table comprising one of a plurality of partitions and a plurality of scan units, the hash table shared by the execution workers, each execution worker scanning a corresponding partition and adding entries to the hash table if the database table is partitioned, each execution worker scanning an unprocessed scan unit and adding entries to the hash table according to the scan unit if the database table comprises scan units, and the workers performing the scanning and the adding in a parallel manner.

In accordance with another embodiment, a device is used to perform hash based database operations. The device comprises: a receiving element that receives a symmetric multiprocessing (SMP) database query, a creating element that creates a plurality of execution workers to process the query, and the execution workers build a hash table from a database table, the database table comprising one of a plurality of partitions and a plurality of scan units, the hash table shared by the execution workers, each execution worker scanning a corresponding partition and adding entries to the hash table if the database table is partitioned, each execution worker scanning an unprocessed scan unit and adding entries to the hash table according to the scan unit if the database table comprises scan units, and the workers performing the scanning and the adding in a parallel manner.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 shows a block diagram of an embodiment of a system for database operation according to the first option;
FIG. 2 shows a block diagram of an embodiment of a system for database operation according to the second option;
FIG. 3 shows a block diagram of an embodiment of a system for shuffling the tuples among workers to avoid contention between workers;
FIG. 4 is a block diagram of an embodiment of a system for parallel probing of hash join;
FIG. 5 is a block diagram of an embodiment of a system for parallel hash aggregation;
FIG. 6 is a block diagram of an embodiment of a system for parallel hash table creation with spilling;
FIG. 7 shows a flow chart of an embodiment of a method for a parallel hash join;
FIG. 8 shows a flow chart of an embodiment of a method for parallel aggregation; and
FIG. 9 illustrates a block diagram of an embodiment processing system for performing methods described herein, which may be installed in a host device.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention.

Disclosed herein are systems and methods to perform hash-based database operations in a parallel manner. When an SMP database receives a query, embodiment systems and methods create multiple execution workers to process the query. A worker includes multiple threads for data processing and exchanging. Each execution worker is assigned a data partition. The execution workers process their own data partition. All the hash-based operations first build a hash table and then perform the operations, such as join and aggregation. In a disclosed embodiment, a hash table is created and shared among all the execution workers. Each worker scans its own partition and adds entries to the shared hash table. For hash join, after the shared hash table is created, each worker probes its partition of the outer join table using the shared hash table. In an embodiment, the hash aggregation is also done with the shared hash table.

Disclosed herein are at least three methods of handling contention between execution workers: synchronization, lock-free algorithms, and shuffling. A producer thread is started by each worker to exchange data tuples among the workers for shuffling. For a hash join, the execution workers scan in parallel and probe the outer table against the shared hash table. For hash aggregation, the execution workers aggregate the results in parallel using the shared hash table. A gather worker collects the results from all the execution workers and sends the results to clients or upper query operators.

If the tables involved in the database operation exceed the memory size of the system, spilling may occur. In an embodiment, the query execution workers scan the tables and create hash partitions on disk in parallel. In spilling situation, for hash join the query execution workers create partition pairs of the inner and outer table in parallel. The workers perform the partition wise hash join in parallel either using the same approach as the non-spilling case, or each worker is assigned a quantity of partition pairs to process. After that, the workers process the partitions on the disk and perform partition wise join or hash aggregation. For hash aggregation, the query execution workers build partitions of the hash table. The workers process the partition one by one using the non-spilling approach or the workers can be allotted a number of partitions to aggregate the results in parallel.

Other solutions for parallelizing hash-based operators in SMP databases include classical hybrid hash join algorithms and hybrid caching algorithms designed for traditional relational database management systems. However, system resources, such as CPUs and memory may not be fully utilized in these solutions.

### Hash Table Building

A SMP system has multiple CPU cores. When receiving a query, the SMP system launches several query execution workers to process the query in parallel. For hash based operations, the first step is to build a hash table. In a disclosed approach, the hash table is shared among all the query execution workers. The relation data may be organized in two ways: (1) Partition the tables according to the degree of parallelism (DOP) of the SMP system. (2) The table data is not partitioned or the number of partitions is different from DOP. In the first case, for example, if the DOP is four, four workers are started to execute the query. Each query execution worker is assigned a partition. Each worker scans its own data partition. In the second case, a parallel scan is utilized. The scan unit is a number of data pages. Each worker processes a scan unit. After it is done, the worker scans another scan unit until the whole table is scanned.

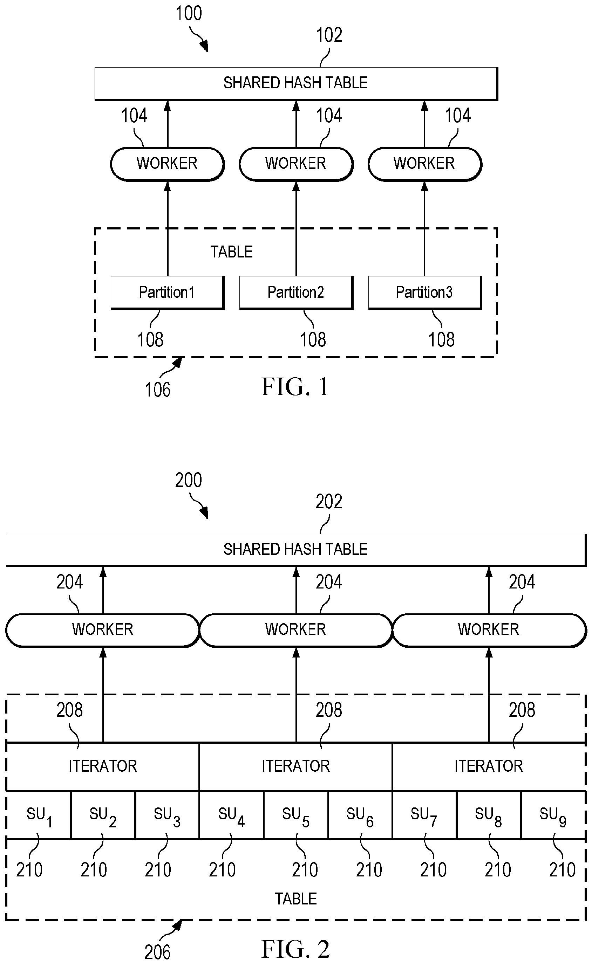

FIG. 1 shows a block diagram of an embodiment of a system 100 for database operation according to the first option. System 100 illustrates parallel hash table creation. System 100 includes a shared hash table 102, a plurality of workers 104, and a partitioned table 106, the portioned table 106 including a plurality of partitions 108. The number of partitions 108 is equal to the DOP. For illustration, the number of partitions 108 and workers 104 is three, but those of ordinary skill in the art will recognize that the number of partitions 108 and workers 104 may be any number and is not limited to three. Each worker 104 is assigned a respective partition 108. The workers 104 scan the partitions 108 and add the entries to the shared hash table 102 in parallel.

FIG. 2 shows a block diagram of an embodiment of a system 200 for database operation according to the second option. System 200 illustrates an alternate embodiment for parallel hash table creation. System 200 includes a shared hash table 202, a plurality of workers 204, and a table 206. The table 206 includes a plurality of iterators 208 and a plurality of scan units (SU) 210 (labeled, SU₁, SU₂, ..., SU₉). The table 206 is not partitioned. For illustration, the number of iterators 208 and workers 204 is three, but those of ordinary skill in the art will recognize that the number of iterators 208 and workers 204 may be any number and is not limited to three. Furthermore, those of ordinary skill in the art will recognize that the number of SUs is not limited to nine, but may be any number. It is not necessary that the number of SUs 210 be evenly divisible by the number of workers 204. If the number of SUs 210 is not evenly divisible by the number of workers 204, then some workers 204 may get more SUs 210 than other workers 204. However, in an embodiment, the SUs 210 are distributed among the workers 204 as evenly as possible to distribute the load substantially evenly among the workers 204. When creating the shared hash table 202, the workers 204 iterate over the SUs and add the entries to the shared hash table 202 in a parallel fashion.

Each worker 204 is assigned some SUs 210. For example SU1, SU2 and SU3 are assigned to the first worker 204; SU4, SU5, SU6 are assigned to the second worker 204. This is just for illustration purpose. In other embodiments, the assignment of SUs 210 to workers 204 may be different. For example, in another embodiment, it is also possible that SU1, SU4 and SU5 are assigned to the first worker 204 and SU2, SU3 and SU6 are assigned to the second worker 204. However, each SU 210 is only processed by one worker 204. In an embodiment, the iterator 208 iterates to the next SU 210 after one SU 210 is processed to ensure that all of the SUs 210 are processed.

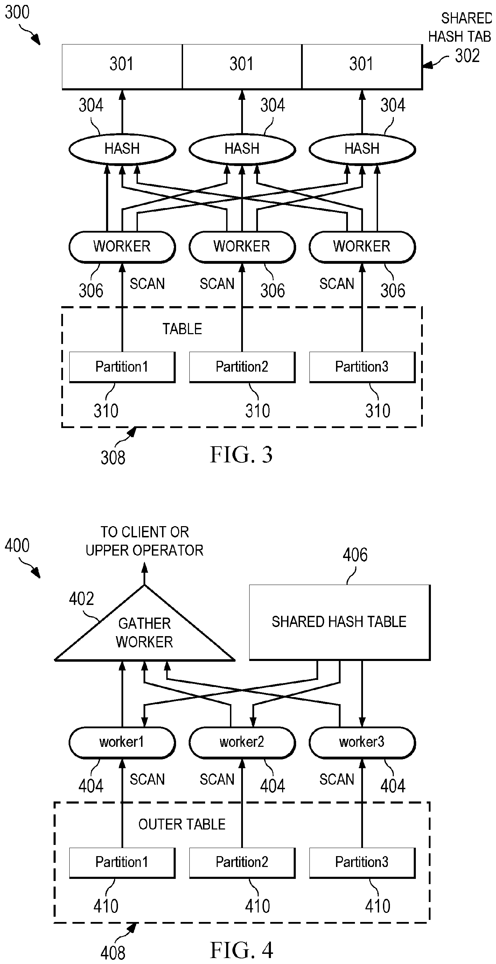

When building the shared hash table (e.g., shared hash table 102 in FIG. 1 or shared hash table 202 in FIG. 3), different workers may try to add entries to the same hash bucket simultaneously. Coordination is needed to resolve contention. Disclosed are three ways to handle this situation. A first option is a synchronization mechanism, like mutex, that can be used to synchronize the writing to the same bucket among workers. A second option utilizes lock-free algorithms to create the hash table, for example, such as described in U.S. Patent No. 6,988,180, so that synchronization is not needed. In a third option, the tuples can be shuffled among the workers such that different workers write to different buckets, thus avoid the contention.

FIG. 3 shows a block diagram of an embodiment of a system 300 for shuffling the tuples among workers to avoid contention between workers. System 300 includes a shared hash table 302, a plurality of execution workers 306, and a table 308. The table 308 is partitioned into a plurality of partitions 310 (labeled Partition1, Partition2, and Partition3). The shared hash table 302 is partitioned into partitions 301 according to the DOP of the SMP database. As those of ordinary skill in the art will recognize, the SMP database is a type of parallel processing database management system running on SMP computing systems that stores and manages the table 308. It should be noted that it is not necessary that the DOP be the same as the number of partitions 310. If the DOP is different from the number of partitions, then the situation may be as described above with reference to Fig. 2. In that case, each worker processes some SUs and shuffles the tuples. In FIG. 3, the DOP is three, but could be another number in other embodiments. For illustration, the number of partitions 310 and workers 306 is three, but those of ordinary skill in the art will recognize that the number of partitions 310 and workers 306 may be any number and is not limited to three. Each worker 306 is assigned a respective partition 310.

The join key is hashed and the system 300 mods the result by the DOP to decide which worker 306 the data should be sent to. In FIG. 3 the DOP is three. The shared hash table 302 is partitioned into three parts. Each execution worker 306 scans its partition 310 and shuffles the data before adding the entry to the hash table 302. Each execution worker 306 starts a producer thread for data exchanging. The producer thread scans the partition data in the partitions 310 corresponding to the execution worker 306 which started the respective producer thread. The producer thread then hashes the partition data and sends the partition data to the corresponding execution workers 306. An execution worker 306 hashes the data with the hash function 304 and adds the data entries to a partition 301 of the shared hash table 302.

### Parallel Probing of Hash Join

FIG. 4 is a block diagram of an embodiment of a system 400 for parallel probing of hash join. The system 400 includes a gather worker 402, a plurality of workers 404, a shared hash table 406, and an outer table 408. The gather worker 402 collects the results from the workers 404 and sends the results to the client. The outer table 408 is partitioned into a plurality of partitions 410. For hash join, after the shared hash table 406 is built on the inner table, the query execution workers 404 probe the shared hash table 406 for each row of the outer table 408 in parallel. Depending on the partition scheme of the outer table 408, either a partition 410 is assigned to a worker 404 if the number of partitions is the same as DOP or if a parallel scan is used. For illustration, the number of partitions 410 and workers 404 is three, but those of ordinary skill in the art will recognize that the number of partitions 410 and workers 404 may be any number and is not limited to three.

In an embodiment, the number of partitions is the same as the DOP. Each worker 404 scans its own partition 410 of the outer table 408 and probes the entry against the shared hash table 406.

### Parallel Hash Aggregation

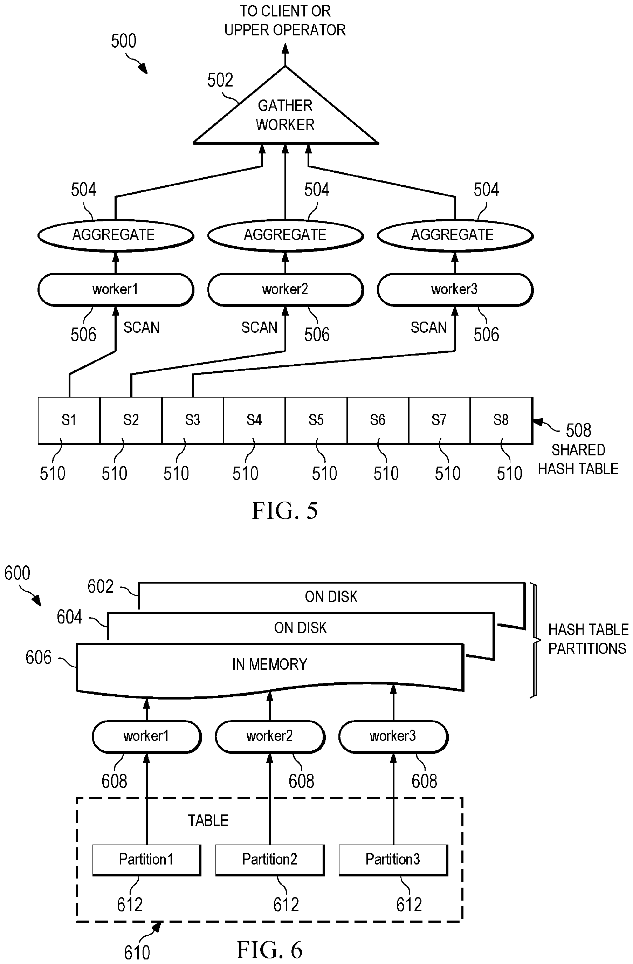

FIG. 5 is a block diagram of an embodiment of a system 500 for parallel hash aggregation. The system 500 includes a gather worker 502, a plurality of aggregate operators 504, a plurality of workers 506, and a shared hash table 508. As those of ordinary skill in the art will recognize, the aggregate operations 504 are database operations. The gather worker 502 collects the results from the aggregate operators 504. The shared hash table 508 is partitioned into partitions 510 labeled S1, S2, ..., S8. For an aggregation operation, such as COUNT DISTICNT, a shared hash table 508 is created. Once the shared hash table 508 has been created, the workers 506 scan the shared hash table 508 to aggregate the tuples. In an embodiment, the shared hash table 508 is split into small partitions 510 and a parallel scan is performed on the shared hash table 508. Each worker 506 is assigned a partition 510 of the shared hash table 508. After the worker 506 finishes processing one partition 510, a new partition 510 of the shared hash table 508 is allotted to the worker 506 until the whole shared hash table 508 is processed. For illustration, the number of aggregate operators 504 and workers 506 is three, but those of ordinary skill in the art will recognize that the number of aggregate operators 504 and workers 506 may be any number and is not limited to three. Also, for illustration, the number of partitions 510 is shown as eight, but those of ordinary skill in the art will recognize that the number of partitions 510 may be any number.

### Spilling Handling for Parallel Hash Join and Hash Aggregation

If the tables are too big and the memory is not enough to hold the whole table when performing a hash join or a hash aggregation, the data, in an embodiment, should to be spilled to the disk. Spilling is determined during the building of shared hash table.

FIG. 6 is a block diagram of an embodiment of a system 600 for parallel hash table creation with spilling. System 600 includes a plurality of hash table partitions 602, 604, 606, a plurality of workers 608 (labeled worker1, worker2, and worker3), a table 610. The table 612 is partitioned into a plurality of partitions 612 (labeled Partion1, Partion2, and Partition3). Hash table partition 606 resides in memory while hash table partitions 602, 604 reside on the disk for spilling when the memory is not sufficient to hold the hash table. For illustration, the number of partitions 612 and workers 608 is three, but those of ordinary skill in the art will recognize that the number of partitions 612 and workers 608 may be any number and is not limited to three. Also, the hash table partitions 602, 604, 606 show one in memory and two on the disk, but those of ordinary skill in the art will recognize that the number of hash table partitions 602, 604 stored on the disk may be any number and is not limited to two.

### Shared Hash Table Creation for Spilling

In an embodiment, during building the shared hash table, the buckets of the hash table 610 are split into groups. Each group is like an expandable partition 612 of the hash table 610. When the memory is not sufficient to hold the hash table 610, one partition 612 (e.g., Partition1) is kept in memory (e.g., hash table partition 606 kept in memory) and the other partitions 612 (e.g., Partition2 and Parition3) of the hash table are spilled onto disk (e.g., hash table partitions 602, 604 kept on disk). In an embodiment, the partition whose size is closest to the memory used for the hash table is selected to be kept in memory. Below is an algorithm to choose the partition to be kept in memory.

### Method for choosing the partition to be kept in memory

*for all the partitions of the hash table*
*calculate the percentage of data in the partition to the data of the hash table using the percentage, estimate the partition size of each partition choose a partition whose size is closes to the size of the memory used for the hash table*

The query execution workers 608 continue adding entries to the shared hash table: for the one kept in memory, add entries to the hash table partition in memory 606; for the rest of the hash table partitions 612, add entries to the partition files on disk 602, 604.

### Parallel Hash Join with Spilling

For hash join after the shared hash table is built, the outer table is read and then the same hash function and number of buckets as the shared hash table are used to create the partitions of the outer table: one partition is kept in memory matching the in memory one of the shared hash table; and all the other partitions are created on disk. Similar as the creation of partitions of the shared hash table, all the query execution workers create the partitions of the outer table in parallel. Since multiple workers may write to the same partition simultaneously, synchronization or shuffling can be used to resolve contention similar to that described above with reference to FIG. 1. After this stage, multiple pairs partitions are created. For each pair of partitions, one is from the outer table and one is from inner table. The bucket range of each pair of partitions is the same.

Partition wise join is used for the hash join. First, the pair of partitions kept in memory are joined. Next, other pairs of partitions created on disk are loaded and are joined. To parallelize the pair wise hash join, there are at least two alternatives.
Option 1: use the method described above with reference to FIG. 4. When joining a pair of partitions, we load the partition of the hash table into memory and shared among all the workers. Each worker is allotted a chunk of the partition of the outer table, for example through parallel scan, and performs the probing in parallel.
Option 2: split the pairs of partitions among the execution workers. Each worker joins a number of pairs of partitions. The join results are gathered from all the workers and sent to a client or upper layer operator. For example, if there are 1024 pairs of partitions created from the inner and outer join tables and the DOP is 16, each worker joins 64 pairs of partitions.

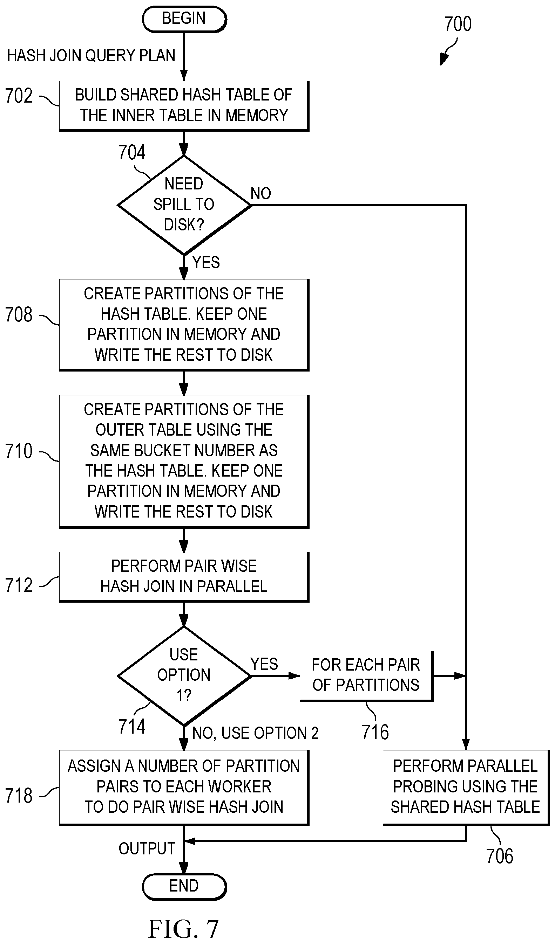

FIG. 7 shows a flow chart of an embodiment of a method 700 for a parallel hash join. Method 700 begins at block 702 where a shared hast table of the inner table is built in memory. At block 704, it is determined whether some of the table needs to spill to the disk. If yes, then the method 700 proceeds to block 708 and performs parallel probing using the shared hash table. If, at block 704, there is no need to spill to the disk, then the method 700 proceeds to block 706 where partitions of the hash table are created and one partition is kept in memory and the rest are written to the disk. At block 710, partitions of the outer table are created using the same bucket number as the hash table, where one partition is kept in memory and the rest are written to the disk. At block 712, pair wise hash join is performed in parallel. At block 714, it is determined whether to use option 1 or option 2 as described above. If Option 1 is selected, then the method 700 proceeds to block 716, where for each pair of partitions, the method 700 proceeds to block 706 to perform parallel probing using the shared hash table. If option 2 is selected, then the method 700 proceeds to block 718 where a number of partition pairs are assigned to each worker to do pair wise hash join.

### Parallel Hash Aggregation with Spilling

In a spilling situation, after the partitions of the hash table are created, the query execution workers, acting in a parallel manner, aggregate the results in one of at least two manners.
Option 1: use the method as described above with reference to system 500 in FIG. 5. The workers, acting in a parallel manner, scan and aggregate one hash partition at a time until all the partitions are processed.
Option 2: allocate the partitions of the hash table to the workers. Each worker process a number of partitions.

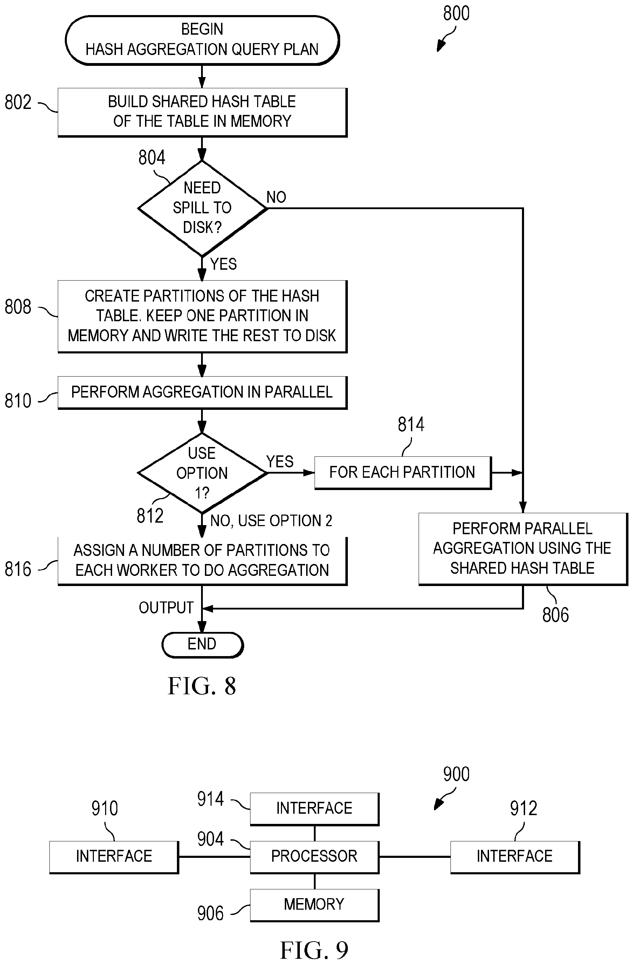

FIG. 8 shows a flow chart of an embodiment of a method 800 for parallel aggregation. The method 800 begins at block 802 where a shared hash table of the table is built in memory. At block 804, it is determined whether it is necessary to spill to the disk. If no, then the method 800 proceeds to block 806 where parallel aggregation is performed using the shared hash table. If, at block 804, it is necessary to spill to the disk, then the method 800 proceeds to block 808 where partitions of the hash table are created with one partition kept in memory and the rest are written to the disk. At block 810, aggregation in parallel is performed. At block 812, it is determined whether to use option 1 or option 2. If option 1 is selected, then the method 800 proceeds to block 814 where, for each partition, parallel aggregation using the shared hash table is performed in block 806. If, at block 812, option 2 is selected, then the method 800 proceeds to block 816 where a number of partitions are assigned to each worker to do aggregation.

FIG. 9 illustrates a block diagram of an embodiment processing system 900 for performing methods described herein, which may be installed in a host device. As shown, the processing system 900 includes a processor 904, a memory 906, and interfaces 910-914, which may (or may not) be arranged as shown in FIG. 9. The processor 904 may be any component or collection of components adapted to perform computations and/or other processing related tasks, and the memory 906 may be any component or collection of components adapted to store programming and/or instructions for execution by the processor 904. In an embodiment, the memory 906 includes a non-transitory computer readable medium. The interfaces 910, 912, 914 may be any component or collection of components that allow the processing system 900 to communicate with other devices/components and/or a user. For example, one or more of the interfaces 910, 912, 914 may be adapted to communicate data, control, or management messages from the processor 904 to applications installed on the host device and/or a remote device. As another example, one or more of the interfaces 910, 912, 914 may be adapted to allow a user or user device (e.g., personal computer (PC), etc.) to interact/communicate with the processing system 900. The processing system 900 may include additional components not depicted in FIG. 9, such as long term storage (e.g., non-volatile memory, etc.).

In some embodiments, the processing system 900 is included in a network device that is accessing, or part otherwise of, a telecommunications network. In one example, the processing system 900 is in a network-side device in a wireless or wireline telecommunications network, such as a base station, a relay station, a scheduler, a controller, a gateway, a router, an applications server, or any other device in the telecommunications network. In other embodiments, the processing system 900 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network. In other embodiments, the processing system 900 is a stand alone data processing system without the capability to communicate with other devices.

A disclosed embodiment of a method in a device for performing hash based database operations includes receiving at the device a database query; creating a plurality of execution workers to process the query; and building by the execution workers a hash table from a database table, the database table comprising one of a plurality of partitions and a plurality of scan units, the hash table shared by the execution workers, each execution worker scanning a corresponding partition and adding entries to the hash table if the database table is partitioned, each execution worker scanning an unprocessed scan unit and adding entries to the hash table according to the scan unit if the database table comprises scan units, and the workers performing the scanning and the adding in a parallel manner. The method may also include synchronizing writing to a hash bucket by the execution workers to minimize contention between the execution workers for the hash bucket or utilizing a lock-free algorithm to minimize contention between the execution workers for a hash bucket. In an embodiment, the method may include partitioning the hash table into a plurality of hast table partitions according to a degree of parallelism (DOP) of the SMP database; starting with each execution worker a corresponding producer thread for data exchanging, the producer thread scanning corresponding partition data from the database table, hashing the corresponding partition data, and sending hashed corresponding partition data to the corresponding execution worker; and hashing with the execution worker the hashed corresponding partition data and adding data entries to a respective partition of the partitioned hash table. The method may include partitioning an outer table; and assigning each partition of the outer table to a respective one of the execution workers, each execution worker scanning a corresponding partition of the outer table and probing an entry from the outer table against the hash table in parallel with the scanning and probing by other execution workers. In an embodiment, the method may include performing an aggregation operation wherein the aggregation operation comprises: partitioning the hash table into partitions; assigning a first partition to a first one of the execution workers; and assigning a second partition to the first one of the execution workers when the first one of the execution workers completes processing the first partition, wherein the second partition has not been processed by one of the execution workers prior to the assigning to the first one of the execution workers. In an embodiment, the method may include splitting buckets of the hash table into groups; keeping one of the groups in memory; and spilling other ones of the groups onto a storage disk. The method may also include determining a percentage of data in a partition of the hash table as compared to all the data in the hash table; and selecting a group size according to the percentage and according to the size of the memory. In an embodiment, the method may include creating a pair of partitions, each pair of partitions comprising a partition of an inner table and a partition of an outer table; loading a partition of the hash table into memory, the partition of the hash table shared by the execution workers; and allotting each of a plurality of portions of the partition of the outer table to a respective one of the execution workers, each execution worker performing join operations on the allotted portion of the partition in parallel with the other execution workers. The method may include creating a pair of partitions, each pair of partitions comprising a partition of an inner table and a partition of an outer table; splitting the pairs of partitions among the execution workers, each worker joining one or more pairs of partitions; and gathering join results from the execution workers. In an embodiment, the method may include performing a parallel hash aggregation operation with spilling, wherein the parallel hash aggregation operation comprises assigning an unprocessed hash partition to one of the execution workers when the one of the execution workers becomes free. The method may include performing a parallel hash aggregation operation with spilling, wherein the parallel hash aggregation operation comprises allocating each of the partitions of the hash table to a respective execution worker, each execution worker processing its assigned partitions.

A disclosed embodiment of a device configured for performing hash based database operations includes a processor and a non-transitory computer readable storage medium storing programming for execution by the processor, the programming including instructions to: receive an SMP database query; create a plurality of execution workers to process the query; and build, by the execution workers, a hash table from a database table, the database table comprising one of a plurality of partitions and a plurality of scan units, the hash table shared by the execution workers, each execution worker scanning a corresponding partition and adding entries to the hash table if the database table is partitioned, each execution worker scanning an unprocessed scan unit and adding entries to the hash table according to the scan unit if the database table comprises scan units, and the workers performing the scanning and the adding in a parallel manner.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method for performing hash based database operations for a symmetric multiprocessing, SMP, database, comprising:
receiving at the SMP database a database query;
creating a plurality of execution workers comprising multiple threads for processing the query; and
building by the execution workers a hash table from a database table, (1) the database table being partitioned according to a degree of parallelism, DOP, of the SMP database into a plurality of partitions and each execution worker being assigned a respective partition, or (2) the database table including a plurality of scan units and each execution worker being assigned a number of scan units, the hash table being shared by the execution workers; wherein
in case (1): each execution worker scans its respective partition and adds entries to the hash table; and
in case (2): each execution worker scans an unprocessed one of its assigned scan units, wherein each scan unit is a plurality of data pages of the database table, adds entries to the hash table according to the scanned scan unit and subsequently scans another unprocessed one of its assigned scan units until the whole database table is scanned and the execution workers performing the scanning and the adding in a parallel manner wherein each scan unit is only processed by one execution worker.

2. The method of claim 1, further comprising synchronizing writing to a hash bucket by the execution workers to minimize contention between the execution workers for the hash bucket.

3. The method of claim 1, further comprising utilizing a lock-free algorithm to minimize contention between the execution workers for a hash bucket.

4. The method of claim 1, further comprising:
partitioning the hash table into a plurality of hast table partitions according to a degree of parallelism (DOP) of the database;
starting with each execution worker a corresponding producer thread for data exchanging, the producer thread scanning corresponding partition data from the database table, hashing the corresponding partition data, and sending hashed corresponding partition data to the corresponding execution worker; and
hashing with the execution worker the hashed corresponding partition data and adding data entries to a respective partition of the partitioned hash table.

5. The method of claim 1, further comprising:
partitioning an outer table; and
assigning each partition of the outer table to a respective one of the execution workers, each execution worker scanning a corresponding partition of the outer table and probing an entry from the outer table against the hash table in parallel with the scanning and probing by other execution workers.

6. The method of claim 1, further comprising performing an aggregation operation wherein the aggregation operation comprises:
partitioning the hash table into partitions;
assigning a first partition to a first one of the execution workers; and
assigning a second partition to the first one of the execution workers when the first one of the execution workers completes processing the first partition, wherein the second partition has not been processed by one of the execution workers prior to the assigning to the first one of the execution workers.

7. The method of claim 1, further comprising:
splitting buckets of the hash table into groups;
keeping one of the groups in memory; and
spilling other ones of the groups onto a storage disk.

8. The method of claim 7, further comprising:
determining a percentage of data in a partition of the hash table as compared to all the data in the hash table; and
selecting a group size according to the percentage and according to the size of the memory.

9. The method of claim 1, further comprising:
creating a pair of partitions, each pair of partitions comprising a partition of an inner table and a partition of an outer table;
loading a partition of the hash table into memory, the partition of the hash table shared by the execution workers; and
allotting each of a plurality of portions of the partition of the outer table to a respective one of the execution workers, each execution worker performing join operations on the allotted portion of the partition in parallel with the other execution workers.

10. The method of claim 1, further comprising:
creating a pair of partitions, each pair of partitions comprising a partition of an inner table and a partition of an outer table;
splitting the pairs of partitions among the execution workers, each worker joining one or more pairs of partitions; and
gathering join results from the execution workers.

11. The method of claim 1, further comprising performing a parallel hash aggregation operation with spilling, wherein the parallel hash aggregation operation comprises assigning an unprocessed hash partition to one of the execution workers when the one of the execution workers becomes free.

12. The method of claim 1, further comprising performing a parallel hash aggregation operation with spilling, wherein the parallel hash aggregation operation comprises allocating each of the partitions of the hash table to a respective execution worker, each execution worker processing its assigned partitions.

13. A device configured for performing hash based database operations, comprising:
a processor; and
a non-transitory computer readable storage medium storing programming for execution by the processor, the programming including instructions to implement the method of any one of the claims 1 to 12.

14. A computer readable storage medium storing instructions which, when executed by a processor, cause the processor to perform the steps of any one of the claims 1 to 12.

## Patentansprüche

1. Verfahren zum Durchführen "Hash"-basierter Datenbankoperationen für eine symmetrische "Multiprocessing-", SMP-, Datenbank, umfassend:
Empfangen einer Datenbankabfrage an der SMP-Datenbank;
Erstellen einer Vielzahl von Ausführungsgliedern, die mehrere "Threads" zum Verarbeiten der Anfrage umfassen; und
Aufbauen einer "Hash"-Tabelle aus einer Datenbanktabelle durch das Ausführungsglied, (1) wobei die Datenbanktabelle gemäß einem Parallelitätsgrad, DOP, der SMP-Datenbank in eine Vielzahl von Partitionen partitioniert wird und jedem Ausführungsglied eine entsprechende Partition zugewiesen wird, oder (2) die Datenbanktabelle eine Vielzahl von Abtasteinheiten aufweist und jedem Ausführungsglied eine Anzahl von Abtasteinheiten zugewiesen wird, wobei die "Hash"-Tabelle durch die Ausführungsglieder gemeinsam genutzt wird; wobei im Fall (1): jedes Ausführungsglied seine jeweilige Partition abtastet und der "Hash"-Tabelle Einträge hinzufügt; und
im Fall (2): jedes Ausführungsglied eine unverarbeitete seiner zugewiesenen Abtasteinheiten abtastet, wobei jede Abtasteinheit eine Vielzahl von Datenseiten der Datenbanktabelle ist, gemäß der abgetasteten Abtasteinheit Einträge der "Hash"-Tabelle hinzufügt und anschließend eine weitere unverarbeitete seiner zugewiesenen Abtasteinheiten abtastet, bis die gesamte Datenbanktabelle abgetastet ist und die Ausführungsglieder das Abtasten und das Hinzufügen parallel durchführen, wobei jede Abtasteinheit durch nur ein Ausführungsglied verarbeitet wird.

2. Verfahren gemäß Anspruch 1, ferner umfassend Synchronisieren des Schreibens in einen "Hash-Bucket" durch die Ausführungsglieder, um den Konflikt zwischen den Ausführungsgliedern um den "Hash-Bucket" zu minimieren.

3. Verfahren gemäß Anspruch 1, ferner umfassend Verwenden eines nicht-blockierenden Algorithmus zum Minimieren des Konflikts zwischen den Ausführungsgliedern um einen "Hash-Bucket".

4. Verfahren gemäß Anspruch 1, ferner umfassend:
Partitionieren der "Hash"-Tabelle in eine Vielzahl von "Hash"-Tabellenpartitionen gemäß einem Parallelitätsgrad (DOP) der Datenbank;
Beginnen mit jedem Ausführungsglied eines entsprechenden Erzeuger-"Thread" zum Datenaustausch, wobei der Erzeuger-"Thread" entsprechende Partitionsdaten aus der Datenbanktabelle abtastet, die entsprechenden Partitionsdaten hasht und die gehashten entsprechenden Partitionsdaten an das entsprechende Ausführungsglied sendet; und
Hashen der gehashten entsprechenden Partitionsdaten mit dem Ausführungsglied und Hinzufügen von Dateneinträgen zu einer entsprechenden Partition der partitionierten "Hash"-Tabelle.

5. Verfahren gemäß Anspruch 1, ferner umfassend:
Partitionieren einer äußeren Tabelle; und
Zuweisen jeder Partition der äußeren Tabelle an ein entsprechendes der Ausführungsglieder, wobei jedes Ausführungsglied eine entsprechende Partition der äußeren Tabelle abtastet und einen Eintrag aus der äußeren Tabelle parallel zum Abtasten und Prüfen durch andere Ausführungsglieder gegen die "Hash"-Tabelle prüft.

6. Verfahren gemäß Anspruch 1, ferner umfassend Durchführen einer Aggregationsoperation, wobei die Aggregationsoperation umfasst:
Partitionieren der "Hash"-Tabelle in Partitionen;
Zuweisen einer ersten Partition an ein erstes der Ausführungsglieder; und
Zuweisen einer zweiten Partition an das erste der Ausführungsglieder, wenn das erste der Ausführungsglieder das Verarbeiten der ersten Partition abgeschlossen hat, wobei die zweite Partition vor dem Zuweisen an das erste der Ausführungsglieder noch nicht durch eines der Ausführungsglieder verarbeitet worden ist.

7. Verfahren gemäß Anspruch 1, ferner umfassend:
Aufteilen der "Buckets" der "Hash"-Tabelle in Gruppen;
Beibehalten einer der Gruppen im Speicher; und
Überlaufen der anderen der Gruppen auf eine Speicherplatte.

8. Verfahren gemäß Anspruch 7, ferner umfassend:
Bestimmen eines Prozentsatzes der Daten in einer Partition der "Hash"-Tabelle im Vergleich zu allen Daten in der "Hash"-Tabelle; und
Auswählen einer Gruppengröße gemäß dem Prozentsatz und gemäß der Größe des Speichers.

9. Verfahren gemäß Anspruch 1, ferner umfassend:
Erstellen eines Partitionspaares, wobei jedes Partitionspaar eine Partition einer inneren Tabelle und eine Partition einer äußeren Tabelle umfasst;
Laden einer Partition der "Hash"-Tabelle in den Speicher, wobei die Partition der "Hash"-Tabelle durch die Ausführungsglieder gemeinsam genutzt wird; und
Zuteilen jedes einer Vielzahl von Abschnitten der Partition der äußeren Tabelle an jeweils eines der Ausführungsglieder, wobei jedes Ausführungsglied parallel zu den anderen Ausführungsgliedern "Join"-Operationen an dem zugeteilten Abschnitt der Partition durchführt.

10. Verfahren gemäß Anspruch 1, ferner umfassend:
Erstellen eines Partitionspaares, wobei jedes Partitionspaar eine Partition einer inneren Tabelle und eine Partition einer äußeren Tabelle umfasst;
Aufteilen der Partitionspaare auf die Ausführungsglieder, wobei jedes Glied ein oder mehrere Partitionspaare "joint"; und
Zusammentragen der "Join"-Ergebnisse aus den Ausführungsgliedern.

11. Verfahren gemäß Anspruch 1, ferner umfassend Durchführen einer parallelen "Hash"-Aggregationsoperation mit Überlaufen, wobei die parallele "Hash"-Aggregationsoperation das Zuweisen einer unverarbeiteten "Hash"-Partition an eines der Ausführungsglieder umfasst, wenn das eine der Ausführungsglieder frei wird.

12. Verfahren gemäß Anspruch 1, ferner umfassend Durchführen einer parallelen Hash-Aggregationsoperation mit Überlaufen, wobei die parallele Hash-Aggregationsoperation das Zuweisen jeder der Partitionen der Hash-Tabelle an ein jeweiliges Ausführungsglied umfasst, wobei jedes Ausführungsglied die ihm zugewiesenen Partitionen verarbeitet.

13. Vorrichtung, die zum Durchführen "Hash"-basierter Datenbankoperationen ausgelegt ist, umfassend:
einen Prozessor; und
ein nichtflüchtiges computerlesbares Speichermedium, das eine Programmierung zur Ausführung durch den Prozessor speichert, wobei die Programmierung Anweisungen zum Implementieren des Verfahrens gemäß einem der Ansprüche 1 bis 12 aufweist.

14. Computerlesbares Speichermedium, das Anweisungen speichert, die beim Ausführen durch einen Prozessor den Prozessor veranlassen, die Schritte gemäß einem der Ansprüche 1 bis 12 durchzuführen.

## Revendications

1. Procédé pour réaliser des opérations de base de données à base de hachage pour une base de données à multitraitement symétrique, SMP, comprenant :
la réception, dans la base de données à SMP, d'une interrogation de base de données ; la création d'une pluralité de travailleurs d'exécution comprenant de multiples fils pour traiter l'interrogation ; et
la construction, par les travailleurs d'exécution, d'une table de hachage à partir d'une table de base de données, (1) la table de base de données étant partitionnée selon un degré de parallélisme, DOP, de la base de données à SMP en une pluralité de partitions et une partition respective étant attribuée à chaque travailleur d'exécution, ou (2) la table de base de données incluant une pluralité d'unités de balayage et un nombre d'unités de balayage étant attribuées à chaque travailleur d'exécution, la table de hachage étant partagée par les travailleurs d'exécution ; dans lequel dans le cas (1) : chaque travailleur d'exécution balaye sa partition respective et ajoute des entrées à la table de hachage ; et
dans le cas (2) : chaque travailleur d'exécution balaye une unité non traitée de ses unités de balayage attribuées, dans lequel chaque unité de balayage est une pluralité de pages de données de la table de base de données, ajoute des entrées à la table de hachage selon l'unité de balayage balayée et par la suite balaye une autre unité non traitée de ses unités de balayage attribuées jusqu'à ce que la table de base de données entière soit balayée, et les travailleurs d'exécution réalisent le balayage et l'ajout de manière parallèle, dans lequel chaque unité de balayage est seulement traitée par un travailleur d'exécution.

2. Procédé selon la revendication 1, comprenant en outre la synchronisation de l'écriture sur un compartiment de hachage par les travailleurs d'exécution pour minimiser le conflit entre les travailleurs d'exécution pour le compartiment de hachage.

3. Procédé selon la revendication 1, comprenant en outre l'utilisation d'un algorithme sans verrouillage pour minimiser le conflit entre les travailleurs d'exécution pour un compartiment de hachage.

4. Procédé selon la revendication 1, comprenant en outre :
le partitionnement de la table de hachage en une pluralité de partitions de table de hachage selon un degré de parallélisme (DOP) de la base de données ;
le commencement, avec chaque travailleur d'exécution, d'un fil de producteur correspondant pour un échange de données, le fil de producteur balayant des données de partition correspondantes de la table de base de données, hachant les données de partition correspondantes, et envoyant des données de partition correspondantes hachées au travailleur d'exécution correspondant ; et
le hachage, avec le travailleur d'exécution, des données de partition correspondantes hachées et l'ajout d'entrées de données à une partition respective de la table de hachage partitionnée.

5. Procédé selon la revendication 1, comprenant en outre :
le partitionnement d'une table extérieure ; et
l'attribution de chaque partition de la table extérieure à un travailleur respectif des travailleurs d'exécution, chaque travailleur d'exécution balayant une partition correspondante de la table extérieure et évaluant une entrée de la table extérieure par rapport à la table de hachage en parallèle avec le balayage et l'évaluation par d'autres travailleurs d'exécution.

6. Procédé selon la revendication 1, comprenant en outre la réalisation d'une opération d'agrégation, dans lequel l'opération d'agrégation comprend :
le partitionnement de la table de hachage en partitions ;
l'attribution d'une première partition à un premier travailleur des travailleurs d'exécution ; et
l'attribution d'une seconde partition au premier travailleur des travailleurs d'exécution lorsque le premier travailleur des travailleurs d'exécution achève le traitement de la première partition, dans lequel la seconde partition n'a pas été traitée par un des travailleurs d'exécution avant l'attribution au premier travailleur des travailleurs d'exécution.

7. Procédé selon la revendication 1, comprenant en outre :
la division de compartiments de la table de hachage en groupes ;
le maintien d'un des groupes en mémoire ; et
la répartition d'autres des groupes sur un disque de stockage.

8. Procédé selon la revendication 7, comprenant en outre :
la détermination d'un pourcentage de données dans une partition de la table de hachage par rapport à toutes les données dans la table de hachage ; et
la sélection d'une taille de groupe selon le pourcentage et selon la taille de la mémoire.

9. Procédé selon la revendication 1, comprenant en outre :
la création d'une paire de partitions, chaque paire de partitions comprenant une partition d'une table intérieure et une partition d'une table extérieure ;
le chargement d'une partition de la table de hachage en mémoire, la partition de la table de hachage étant partagée par les travailleurs d'exécution ; et
l'allocation de chacune d'une pluralité de portions de la partition de la table extérieure à un travailleur respectif des travailleurs d'exécution, chaque travailleur d'exécution réalisant des opérations conjointes sur la portion allouée de la partition en parallèle avec les autres travailleurs d'exécution.

10. Procédé selon la revendication 1, comprenant en outre :
la création d'une paire de partitions, chaque paire de partitions comprenant une partition d'une table intérieure et une partition d'une table extérieure ;
la division des paires de partitions parmi les travailleurs d'exécution, chaque travailleur joignant une ou plusieurs paires de partitions ; et
la collecte de résultats conjoints à partir des travailleurs d'exécution.

11. Procédé selon la revendication 1, comprenant en outre la réalisation d'une opération d'agrégation de hachage parallèle avec répartition, dans lequel l'opération d'agrégation de hachage parallèle comprend l'attribution d'une partition de hachage non traitée à un des travailleurs d'exécution lorsque l'un des travailleurs d'exécution devient libre.

12. Procédé selon la revendication 1, comprenant en outre la réalisation d'une opération d'agrégation de hachage parallèle avec répartition, dans lequel l'opération d'agrégation de hachage parallèle comprend l'attribution de chacune des partitions de la table de hachage à un travailleur d'exécution respectif, chaque travailleur d'exécution traitant ses partitions attribuées.

13. Dispositif configuré pour réaliser des opérations de base de données à base de hachage, comprenant :
un processeur ; et
un support de stockage non transitoire lisible par ordinateur stockant une programmation pour l'exécution par le processeur, la programmation incluant des instructions pour implémenter le procédé de l'une quelconque des revendications 1 à 12.

14. Support de stockage lisible par ordinateur stockant des instructions qui, lorsqu'elles sont exécutées par un processeur, font en sorte que le processeur réalise les étapes d'une quelconque des revendications 1 à 12.
